# EUROPÄISCHE PATENTANMELDUNG

(11) **EP 1 286 090 A2**
(43) Veröffentlichungstag der Anmeldung: **26.02.2003**
(21) Anmeldenummer: 02017798.6
(22) Anmeldetag: 13.08.2002
(51) Int. Cl.: F16K 1/30, F16K 17/00

(54) **Schnellschlussventil**

(30) Priorität: 16.08.2001 CZ 20012998
(71) Anmelder: Ferox, a.s., 405 30 Decin 5 (CZ)
(72) Erfinder: Chrz, Vaclav, CSc.,Dipl.-Ing., 40011 Usti nad Labem (CZ); Kirchgässner, Gerd, Dipl.-Ing., 40502 Decin IV (CZ); Zaruba, Petr, Dipl.-Ing., 40502 Decin 6 (CZ)
(74) Vertreter: Kastner, Vaclav, Dipl.-Ing.

(57) **Zusammenfassung**

Schnellverschlussventil zur selbsttätigen Absperrung des Flüssigkeitsdurchflusses, welches mit einem Eingang (6), einem Ausgang (8) und einem zwischen dem Eingang und dem Ausgang angeordneten Schliesselement (3) versehen ist. Das Schliesselement (3) ist mit einer Kolbenstange in der Form einer Zugstange (4) mit einem Kolben (5) verbunden, der das Schliessen und Öffnen des Ventils betätigt. Das Schliesselement (3) ist unterhalb eines Sitzes (7) angeordnet und zum unteren Ende der Zugstange (4) befestigt, die durch den Sitz (7) zum Kolben (5) geht, der an der Zugstange (4) befestigt und in einer Arbeitskammer (16) untergebracht ist, die mit einem Sicherheitsventil (2) versehen ist.

## Beschreibung

### Bereich der Technik

Die Erfindung betrifft ein Schnellverschlussventil zur Absicherung von Druckbehältern gegen überhöhten Druck beim Befüllen mit einem Medium, z.B. Flüssigkeit und/oder Gas.

### Stand der Technik

Es ist notwendig, beim Befüllen von Druckbehältern mit Flüssigkeiten oder Gasen, speziell kryogenen Gasen, aus Quellen, die beim Umfüllen einen höheren Druck als der maximal genehmigte Druck des Behälters erzeugen können, den Behälter gegen einen unzulässigen überhöhten Druck zu schützen.

Druckbehälter sind mit einem oder mehreren Sicherheitsventilen und/oder einer oder mehreren Berstscheiben ausgerüstet, die sich öffnen, wenn der Druck im Behälter den maximal zulässigen Betriebsdruck im Laufe des normalen Betriebs übersteigt oder die unter ungünstigen Bedingungen, die sich vorahnen lassen, eingreifen. Die halten dann den Druck im Behälter auf oder unter dem zulässigen Wert durch Abblassen der Flüssigkeit oder desw unter Wärmeeinwirkung entstandenen Gases. Quellen der umgefüllten Flüssigkeit können jedoch so grosse Mengen von Flüssigkeit mit höheren Druck liefern, dass die Sicherheitsventile keine ausreichende Leistung zum Absichern des Behälters gegen übermässigem Druck aurweisen können. Behälter werden deshalb gegen einen übermässigen Druck dadurch abgesichert, dass in der Fülleitung ein Schnellschlussventil installiert wird, der sich schliesst, wenn der Druck im Behälter den maximalen Betriebsdruck erreicht oder überschreitet. Die bisher bekannten Schnellschlussventile sind mit einer komprimierten, mittels eines Schnappers abgesicherten Feder ausgestattet, die sich beim Erreichen des maximal genehmigten Betriebsdruck löst und dadurch der Durchfluss der Flüssigkeit in den Behälter verhindert wird. Um den Durchfluss wieder zu öffnen, muss man die Feder wieder komprimieren und das Ventil in geöffneter Lage mit dem Schnapper absichern. Diese Tätigkeit ist langwierig und es ist auch notwendig, zum Spannen der Feder eine spezielle Spannvorrichtung zu verwenden. Dabei ist die Konstruktion eines solchen Schnellverschlussventils kompliziert und die passiven Widerstände im Auslösungsmechanismus sind hinsichtlich der Zuverlässigkeit äusserst problematisch.

Schnellschlussventile werden insbesondere bei den Speichern für verflüssigte Gase verwendet, die bei niedrigen Temperaturen gelagert und gefördert werden, wie z.B. flüssiger Stickstoff, Sauerstoff, Argon, Methan, Kohlendioxid und weitere. Diese verflüssigte Gase werden in Druckbehältern mit Vakuum- oder Schaumisolierung gelagert und transportiert, wobei die Druckbehälter mit Sicherheitseinrichtungen gegen übermässigen Druck beim geläufigen Betrieb sowie bei möglichen Störungen ausgerüstet sind. Diese Einrichtungen haben jedoch normalerweise keine ausreichende Leistung, um im Falle einer plötzlichen Druckerhöhung, was bei der Befüllung mit leistungsfähigen Pumpen oder aus anderen Hochdruckquellen und bei hohem Durchfluss auftreten kann, und zwar in dem Moment, wann es durch die Unaufmerksamkeit des Bedieners zum vollständigen Auffüllen des Behälters mit Druckflüssigkeit kommen würde. In diesem Fall ist es notwendig, das Überschreiten des genehmigten Betriebsdrucks durch Absperren der Rohrleitung und/oder durch Begrenzung des Durchflusses der Flüssigkeit aus der Quelle in den gefüllten Behälter zu verhindern. Deshalb werden spezielle Schnellschlussventile gefordert.

Es ist ein Druckbegrenzungsventil bekannt, das in der Schrift DE 255 05 58 A1 veröffentlicht wurde. Sein elastisches Schliessorgan ist mit einem Flüssigkeitsdruck an die Wand des Ventilkörpers gedrückt, die mit der Zufuhr sowie Abfuhr des Druckmediums versehen ist. Im Ventil sind die Flüssigkeit und das Gas, z.B. Luft, hermetisch voneinander durch einen Kolben getrennt und in oberen Teil einer länglichen Öffnung, an die das Schliessorgan anliegt, eine Gaskammer gebildet ist. Die durch dieses Ventil abgesicherte Einrichtung ist mit dem Schliessorgan mittels radialer Öffnungen verbunden. Eine solche Einrichtung ermöglicht zwar eine einfache Einstellung des Auslösedrucks, sie ist jedoch zum Absichern von Druckbehältern nicht verwendbar, wo eine schnelle Inbetriebnahme nach Absenken des unerwünschten Druckunterschieds ermöglicht werden soll.

Aus der Schrift DE 100 11 674 A1 ist ein Sicherungsrichtungsventil mit einer Auslöseschwelle bekannt, das einen abgestuften Kanal aufweist, der am Eingang mit einer Passage mit kleinem Querschnitt versehen ist und welche in eine stromaufwärtige Kammer mündet, und ferner eine Passage mit grossem Querschnitt aufweist, die in eine stromabwärtige Kammer eingemündet ist. Zwischen den Passagen ist ein Ventilsitz angeordnet und die stromabwärtige Kammer ist mittels einer kleinen Durchführung mit dem Ventilraum verbunden. Da das Schliessen des Ventils magnetisch durchgeführt wird, und zwar beim Absinken des Drucks, wobei dessen Öffnen mit einem Öffnungsdruck geschieht, ist diese Ventil zur Sicherung von Druckbehältern gegen einen übermässigen Druck nicht verwendbar und dazu ist weder ein genauer Wert des Schliessdrucks noch des Öffnungsdrucks gegeben.

Aus der Schrift GB 2 355 510 A ist ein Ventil zur Durchflussregulierung bekannt, insbesondere für eine Schlammpumpe, das ein bewegliches Ventilelement im Ventilkörper aufweist. Mittels einer Passage sind die Seiten unterhalb und oberhalb des Ventilelements verbunden und aus der Oberseite ist mittels einer Kolbenstange die Verbindung mit dem Kolben in einer Kammer durchgeführt, wo der Druckausgleich mit dem hydrostatischen, durch den Luftdruck beeinflussten Öldruck vorgenommen ist. Zum Öffnen des Ventils ist es jedoch notwendig, nach dessen Anschliessen einen Druckimpuls zu liefern, sodass, wenn dieses kompliziertes und sicherlich auch kostspieliges Ventil ein automatisches Öffnen nach einer vorherigen Schliessung bewältigen soll, ist eine weitere Einrichtung notwendig, die deren wiederholte Inbetriebnahme durch den Druckimpuls vornehmen muss.

Im ganzen ist es möglich zu sagen, die bisher bekannten Schnellschlussventile sind zum Abschliessen des Durchflusses von Flüssigkeiten, insbesondere von verflüssigten Gasen, in einen Druckbehälter nicht geeignet, da sie wegen ihrer komplizierten Konstruktion, schwierigen Bedienung und hohen Kosten, einen wirtschaftlichen Einsatz nicht erlauben.

### Erfindungswesen

Die angeführten Nachteile werden mit dem erfindungsgemässen Schnellschlussventil zur automatischen Absperrung des Flüssigkeitsdurchflusses beseitigt, welches mit einem Eingang, einem Ausgang und einem zwischen dem Eingang und dem Ausgang angeordneten Schliesselement versehen ist und wo das Schliesselement mit einer Kolbenstange in der Form einer Zugstange mit einem Kolben verbunden ist, der das Schliessen und Öffnen des Ventils betätigt, wobei das Wesen der Erfindung darauf beruht, dass das Schliesselement unterhalb eines Sitzes angeordnet und zum unteren Ende der Zugstange befestigt ist, die durch den Sitz zum Kolben geht, der an der Zugstange befestigt und in einer Arbeitskammer untergebracht ist, die mit einem Sicherheitsventil oder Berstscheibe versehen ist.

Die Arbeitskammer ist oberhalb des Kolbens mit einem erweiterten Querschnitt versehen, in dem sich bei geöffneter Stellung des Schliesselements der Kolben befindet, wodurch der Durchflussquerschnitt um den Kolben vergrössert ist.

Im Raum oberhalb des Sitzes ist eine Austrittskammer angeordnet, die mit dem Raum unterhalb des Kolbens mittels des Spiels um die Zugstange verbunden ist.

Alternativ ist dann oberhalb des Sitzes eine Austrittskammer angeordnet, die mit dem Raum unterhalb des Kolbens mittels eines Kanals oder einer Rohrleitung verbunden ist.

Das Sicherheitsventil kann durch eine Berstscheibe ersetzt werden, die beim Erreichen des maximalen zulässigen Betriebsdrucks bersten und damit die Funktion des Sicherheitsventils ersetzen wird.

Wenn es bei der Befüllung eines Behälters, der mit dem Ausgang des erfindungsgemässen Schnellschlussventils verbunden ist, zum Überschreiten des Öffnungsdrucks des Sicherheitsventils kommt, wird das Sicherheitsventil geöffnet, wodurch der Druck oberhalb des Kolbens absinkt und der Druckunterschied unterhalb und oberhalb des Kolbens bewirkt dann die Bewegung des Kolbens in der Richtung nach oben und damit wird ber die Zugstange das Schliesselement auf den Sitz gezogen und damit der Durchlass geschlossen. Die Abmessungen der Arbeitskammer können so gewählt werden, dass durch die Bewegung des Kolbens nach oben und durch den Eintritt des Kolbens in den vergrösserten Querschnitt eine Erhöhung des Flüssigkeitsdurchflusses über das Sicherungsventil verursacht wird. Dadurch erweitert sich der freie Querschnitt und erlaubt einen höheren Durchfluss zum Sicherheitsventil. Folglich erhöht sich der Druck unterhalb des Schliesselements auf den Wert des Quellendrucks, wobei der Druck oberhalb des Schliesselements auf dem Niveau des Schliessdrucks des Sicherheitsventils gehalten wird. Dadurch entsteht eine Anpresskraft, die das Schliesselement in geschlossener Lage hält, die so lange dauert, bis der Druck im Eingang wieder unter den Schliessdruck des Sicherheitsventils absinkt. Das Absinken des Drucks unterhalb des Schliesselements unter den Wert der Schliessdrucks des Sicherheitsventils verursacht die Bewegung des Schliesselements nach unten, sodass das ganze Schnellschlussventil wieder geöffnet wird. Die Bewegung des Schliesselements nach unten wird durch die Gravitation gefördert. Das heisst, dass nach der Beseitigung der Gefahr eines übermässigen Drucks aus der Eingangsseite der Flüssigkeit wieder das erfindungsgemässe Schnellschlussventil geöffnet und zum weiteren Betrieb bereit ist. Das Schnellschlussventil erfüllt seine Funktion auch bei einer Undichtheit zwischen dem Ventilsitz und dem Schliesselement, wenn solche Undichtheit den Flüssigkeitsdurchfluss unter den Wert des maximalen Durchflusses des Sicherheitsventils, gegebenenfalls der weiteren Sicherungseinrichtungen im Behälter ausreichend begrenzt.

Der Vorteil der erfindungsgemässen Lösung ist die einfache Konstruktion, da das ganze Schnellverschlussventil praktisch nur eine bewegliche Gruppe, und zwar das Schliesselement, die Zugstange und den Kolben als Einheit aufweist, wobei das Auslöseorgan ein standardmässiges Sicherheitsventil ist. Aus dieser einfachen Konstruktion entstehen dann auch nur niedrige Anschaffungskosten, aber auch eine grosse Betriebszuverlässlichkeit und entsprechend geringe Betriebskosten.

Der Vorteil der erfindungsgemässen Lösung ist also das selbsttätige Öffnen des Durchflusses beim Absinken des Drucks am Eingang auf den Einstellungswert des Sicherheitsventils. Ein weiterer Vorteil wird auch durch die Tatsache verursacht, dass nach dem Abschliessen des Schnellschlussventils das Sicherheitsventil der Kammer durch den vergrösserten Querschnitt mit dem gesicherten Behälter in Verbindung bleibt, was eigentlich eine weitere Sicherungseinrichtung des Behälters darstellt.

### Übersicht der Abbildungen

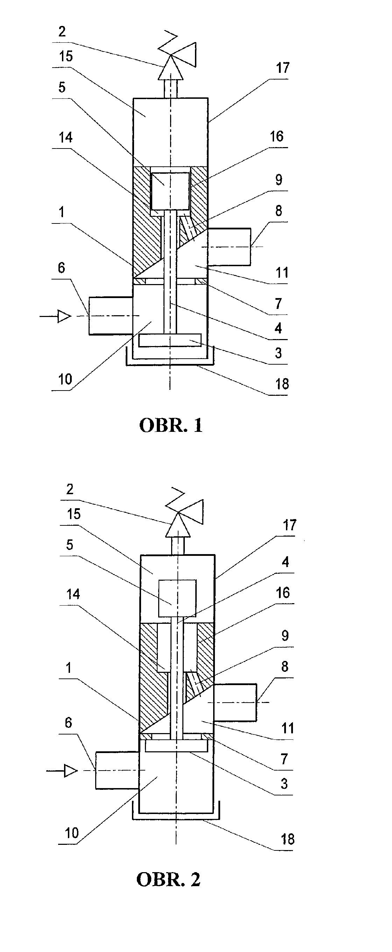

In Fig. 1 ist schematisch ein Achsenschnitt durch das erfindungsgemässe Schnellschlussventil in geöffneter Lage veranschaulicht, in der sich das Ventil beim normalen Füllvorgang eines Druckbehälters für flüssiges Kohlendioxid mit Hilfe einer Pumpe befindet und in Fig.2 ist dann dasselbe Schnellverschlussventil in abgesperrter Lage veranschaulicht, und zwar wieder im Achsenschnitt.

### Ausführungsbeispiele der Erfindung

Das Schnellschlussventil nach Fig.1 kann z.B. am Eingang eines Speichers für flüssigen Stickstoff oder für flüssiges Kohlendioxid installiert werden und sichert diesen Behälter gegen Überschreiten des maximal zulässigen Betriebsdrucks beim Umfüllen aus einem Tankfahrzeug mittels Pumpe ab.

Das Schnellschlussventil 17 besteht aus einem Ventilkörper 1 mit einem Eingang 6 und einem Ausgang 8. Hinter dem Eingang 6 ist im Ventilkörper 1 eine Eintrittskammer 10 angeordnet, die mit einem Sitz 7 für ein Schliesselement 3, in diesem Falle tellerförmig, versehen ist. Dieses ist mit Hilfe einer Zugstange 4, die durch den Sitz 7 führt, mit einem Kolben 5 verbunden, der in geöffneter Lage des Schnellverschlussventils 17 in einer Arbeitskammer 16 angebracht ist. Diese ist oberhalb des Kolbens 5 mit einem vergrösserten Querschnitt 15 versehen und mit einem Sicherheitsventil 2 ausgestattet. Oberhalb des Sitzes 7 ist vor dem Ausgang 8 im Ventilkörper 1 eine Austrittskammer 11 angeordnet, die mittels eines Kanals 9 und/oder mittels Spiels herum die Zugstange 4 mit dem Raum 14 unterhalb des Kolbens 5 verbunden ist. An den Eingang 6 ist eine nicht veranschaulichte Flüssigkeitsdruckquelle angeschlossen, z.B. flüssiger Stickstoff vom Austrittsstutzen der Pumpe eines Lieferfahrzeuges. Beim Abfüllen des nicht veranschaulichten Druckbehälters strömt der Stickstoff durch den Eingang 6 in den Ventilkörper 1 ein und dann durch den Ausgang 8 in den Druckbehälter. Der Innenraum des Schnellschlussventils 17, also der Innenraum des Ventilkörpers 1 ist mit dem Raum 14 unterhalb des Kolbens 5 z.B. mittels eines Kanals 9 verbunden. Der Spiel zwischen dem Kolben 5 und der Wand der Arbeitskammer 16 ermöglicht eine freie Achsenbewegung des Kolbens 5 und gleichzeitig einen Druckausgleich im Raum 14 unterhalb und oberhalb des Kolbens 5. Das Schliesselement 3 befindet sich in geöffneter Lage des Schnellschlussventils 17 unter dem Niveau des Eingangs 6, sodass es nicht zum gegenseitigen Beeinflussen des Flüssigkeitsdurchflusses und der Lage des Schliesselements 3 kommt. Unterhalb des Sitzes 7 ist der Ventilkörper 1 vorteilhaft mit einem Montagedeckel 18 abgeschlossen, um dadurch einen einfachen Zugang zum Schliesselement 3 zu ermöglichen.

Das Sicherheitsventil 2 ist auf den maximalen zugelassenen Betriebsdruck des nicht dargestellten Druckbehälters eingestellt. Diese Einstellung kann z.B. um 5% oder um einen anderen, durch gültige Normen gegebenen Wert höher sein als der Öffnungsdruck des Sicherheitsventils 2, welches den Druckbehälter sichert. Falls dieser eingestellte Wert überschritten wird, öffnet sich das Sicherheitsventil 2. Dadurch sinkt der Druck oberhalb des Kolbens 5 und die den Druckbehälter füllende Flüssigkeit strömt durch den Kanal 9 unter den Kolben 5, der sich abhebt und hebt auch mit der Zugstange 4 das Schliesselement 3 zum Sitz 7. Dadurch wird der Flüssigkeitsdurchfluss herum das Schliesselement 3 durch das Schnellschlussventil 17 gesperrt.

Diese geschlossene Lage ist in Fig.2 veranschaulicht. Falls der Druck am Eingang 6 und unterhalb des Schliesselements 3 höher als der Druck oberhalb dessen ist, der durch die Einstellung des Sicherheitsventils 2 gegeben wird, bleibt das Schnellschlussventil 17 geschlossen. Dadurch sichert das Sicherheitsventil 2 den Druckbehälter gegen ein Überschreiten des maximal zulässigen Betriebsdrucks ab. Sobald es in der Zufuhr zum Schnellschlussventil 17 zum Absinken des Drucks unter den eingestellten Wert des Sicherheitsventils 2 kommt, das Schliesselement 3 fällt zusammen mit der Zugstange 4 als Folge des Druckausgleichs, wodurch die obere gesperrte Lage verursacht wurde, herunter und das Schnellschlussventil 17 öffnet sich dadurch selbsttätig und der Druckbehälter kann wieder gefüllt werden.

Das Schliesselement 3 kann auch andere Formen aufweisen, z.B. eines Kegels oder eines Kugelabschnitts.

### Gewerbliche Verwendbarkeit

Das erfindungsgemässe Schnellschlussventil kann insbesondere bei Speichern für verflüssigte Gase und bei den Druckbehältern ausgenutzt werden die zur Lagerung und zum Transport von Druckflüssigkeiten bestimmt sind.

## Patentansprüche

1. Schnellschlussventil zur automatischen Absperrung des Flüssigkeitsdurchflusses, welches mit einem Eingang, einem Ausgang und einem zwischen dem Eingang und dem Ausgang angeordneten Schliesselement versehen ist und wo das Schliesselement mit einer Kolbenstange in der Form einer Zugstange mit einem Kolben verbunden ist, der das Schliessen und Öffnen des Ventils betätigt, **dadurch gekennzeichnet, dass** das Schliesselement (3) unterhalb eines Sitzes (7) angeordnet und am unteren Ende der Zugstange (4) befestigt ist, die durch den Sitz (7) zum Kolben (5) führt, der an der Zugstange (4) befestigt und in einer Arbeitskammer (16) untergebracht ist, die mit einem Sicherheitsventil (2) oder Berstscheibe versehen ist.

2. Schnellschlussventil nach Anspruch 1, **dadurch gekennzeichnet, dass** die Arbeitskammer (16) oberhalb des Kolbens (5) mit einem vergrösserten Querschnitt (17) versehen ist, in dem sich bei der Lage des Schliesselements (3) im Sitz (7) der Kolben (5) befindet, wodurch der Durchflussquerschnitt um den Kolben (5) vergrössert ist.

3. Schnellschlussventil nach Anspruch 1, **dadurch gekennzeichnet, dass** im Raum oberhalb des Sitzes (7) eine Austrittskammer (11) angeordnet ist, die mit dem Raum (14) unterhalb des Kolbens (5) mittels des Spiels um die Zugstange (4) verbunden ist.

4. Schnellschlussventil nach Anspruch 1, **dadurch gekennzeichnet, dass** oberhalb des Sitzes (7) eine Austrittskammer (11) angeordnet ist, die mit dem Raum (14) unterhalb des Kolbens (5) mittels eines Kanals (9) oder einer Rohrleitung verbunden ist.

5. Schnellschlussventil nach Anspruch 1, **dadurch gekennzeichnet, dass** das Sicherheitsventil (2) durch eine Berstscheibe ersetzt ist, die beim Erreichen des maximalen zulässigen Betriebsdrucks bersten und damit die Funktion des Sicherheitsventils ersetzen wird .
